# EUROPEAN PATENT APPLICATION

(11) **EP 4 755 179 A1**
(43) Date of publication of application: **10.06.2026**
(21) Application number: 24888656.6
(22) Date of filing: 01.11.2024
(51) Int. Cl.: A01K 23/00

(54) **PET DIAPER**

(30) Priority: 07.11.2023 JP 2023189842
(71) Applicant: Unicharm Corporation, Ehime 799-0111 (JP)
(72) Inventor: KOMATSUBARA, Daisuke, Kanonji-shi, Kagawa 769-1602 (JP)
(74) Representative: Dolleymores
(86) International application number: PCT/JP2024/039081
(87) International publication number: WO 2025/100360

(57) **Abstract**

A pet diaper 1 includes a main body portion 2 having a first sheet 31 made of a nonwoven fabric disposed at a position facing a skin of a pet in a worn state, a back sheet 4, and an absorbent core 11. The back sheet 4 has an exterior sheet 41 made of a nonwoven fabric constituting an outermost surface of the main body portion 2, and a leakage-preventing sheet 42 disposed between the exterior sheet 41 and the absorbent core 11. The main body portion 2 is provided with a tail insertion portion 6. The tail insertion portion 6 has a cut portion 6a formed by cutting the main body portion 2 in a thickness direction Z, and a cut portion 6b provided separately from the cut portion 6a. In a boundary region B between the cut portion 6a and the cut portion 6b of the main body portion 2, at least one opening 31a, 41a is provided in at least one of the first sheet 31 and the exterior sheet 41.

## Description

### Technical Field

The present disclosure relates to a pet diaper.

### Background Art

Conventionally, a pet diaper to be worn on a pet such as a dog or a cat is known. For example, Patent Literature 1 discloses a pet diaper provided with a tail insertion portion (cut) for inserting a tail of a pet in a portion on a dorsal side relative to an absorbent core. In the pet diaper disclosed in Patent Literature 1 described above, the tail insertion portion is configured such that a size adjustment of a tail insertion hole is possible by a plurality of cut portions (cuts) disposed apart from each other.

### Citation List

### Patent Literature

Patent Literature 1: Japanese Unexamined Patent Publication No. 2012-205542

### Summary of Invention

### Technical Problem

When the tail insertion portion capable of size adjustment is constituted by a plurality of cut portions as disclosed in Patent Literature 1 described above, in order to connect the plurality of cut portions to each other to form a tail insertion hole of a predetermined size, it may be necessary to break a portion (boundary portion) between the plurality of cut portions in a main body portion of the pet diaper. When a strong force is required for such breaking processing, not only is convenience for a user performing the breaking processing impaired, but there is also a possibility that the main body portion is broken in a direction different from an originally assumed breaking direction.

Therefore, an aspect of the present disclosure aims to provide a pet diaper capable of easily and accurately performing breaking processing for connecting a plurality of cut portions in a pet diaper configured to be capable of forming a tail insertion hole of a predetermined size by connecting the plurality of cut portions.

### Solution to Problem

A pet diaper according to an aspect of the present disclosure is a pet diaper to be worn on a pet, including a main body portion having: a top sheet made of a nonwoven fabric disposed at a position facing a skin of the pet in a worn state where the pet diaper is worn on the pet; a back sheet disposed on a side opposite to a skin side of the pet in the worn state; and an absorbent core disposed between the top sheet and the back sheet, wherein the back sheet has an outer sheet made of a nonwoven fabric constituting an outermost surface of the main body portion, and an inner sheet disposed between the outer sheet and the absorbent core, the main body portion is provided with a tail insertion portion for inserting a tail of the pet, the tail insertion portion has a first cut portion formed by cutting the main body portion in a thickness direction which is a stacking direction of sheets constituting the main body portion, and a second cut portion provided separately from the first cut portion, and in a boundary region between the first cut portion and the second cut portion of the main body portion, at least one opening penetrating in the thickness direction and having a predetermined area is provided in at least one of the top sheet and the outer sheet.

### Advantageous Effects of Invention

According to the present disclosure, in a pet diaper configured to be capable of forming a tail insertion hole of a predetermined size by connecting a plurality of cut portions, it is possible to provide a pet diaper capable of easily and accurately performing breaking processing for connecting the plurality of cut portions.

### Brief Description of Drawings

FIG. 1 is a plan view of a pet diaper according to an embodiment as viewed from a skin side.
FIG. 2 is a plan view of the pet diaper of FIG. 1 as viewed from a non-skin side.
FIG. 3 is a cross-sectional view of the pet diaper taken along line III-III of FIG. 1.
FIG. 4 is a cross-sectional view of the pet diaper taken along line IV-IV of FIG. 1.
FIG. 5 is a diagram illustrating an example of a worn state of the pet diaper.
FIG. 6 is an enlarged view of a first sheet as viewed from the skin side.
FIG. 7 is an enlarged view of an exterior sheet as viewed from the non-skin side.
FIG. 8 is an enlarged view of a portion including a boundary region of a main body portion as viewed from the skin side.
FIG. 9 is a diagram schematically illustrating an example of a hot melt adhesive applied to each of the first sheet and the exterior sheet.
FIG. 10 is an enlarged view of a portion including a boundary region of a main body portion according to a modification as viewed from the skin side.

### Description of Embodiments

At least the following aspects 1 to 10 will become apparent from the description of the present specification and the accompanying drawings.

### (Aspect 1)

A pet diaper to be worn on a pet, including a main body portion having: a top sheet made of a nonwoven fabric disposed at a position facing a skin of the pet in a worn state where the pet diaper is worn on the pet; a back sheet disposed on a side opposite to a skin side of the pet in the worn state; and an absorbent core disposed between the top sheet and the back sheet, wherein the back sheet has: an outer sheet made of a nonwoven fabric constituting an outermost surface of the main body portion; and an inner sheet disposed between the outer sheet and the absorbent core, the main body portion is provided with a tail insertion portion for inserting a tail of the pet, the tail insertion portion has a first cut portion formed by cutting the main body portion in a thickness direction which is a stacking direction of sheets constituting the main body portion, and a second cut portion provided separately from the first cut portion, and in a boundary region between the first cut portion and the second cut portion of the main body portion, at least one opening penetrating in the thickness direction and having a predetermined area is provided in at least one of the top sheet and the outer sheet.

In the above pet diaper, the tail insertion portion has the first cut portion and the second cut portion provided separately from each other. That is, it is configured such that a tail insertion hole of a predetermined size can be formed by connecting the first cut portion and the second cut portion. Further, in the boundary region between the first cut portion and the second cut portion, an opening is provided in at least one of the top sheet and the outer sheet constituting the main body portion. By providing such an opening in the boundary region, it is possible to make a portion corresponding to the boundary region of the main body portion easy to tear. Further, as a result of the portion corresponding to the boundary region of the main body portion becoming easy to tear, when a user tries to break the portion to connect the first cut portion and the second cut portion when using the pet diaper, it is also prevented that the main body portion is broken in an unexpected direction. Therefore, according to the above pet diaper, breaking processing for connecting the plurality of cut portions can be performed easily and accurately.

### (Aspect 2)

The pet diaper according to Aspect 1, wherein a width of the opening is smaller than a shortest distance between the first cut portion and the second cut portion.

According to Aspect 2, in a state before use of the pet diaper, it is possible to prevent the first cut portion and the second cut portion from being connected via the opening, and to appropriately maintain a state where the first cut portion and the second cut portion are separated.

### (Aspect 3)

The pet diaper according to Aspect 2, wherein the width of the opening is 1/2 or less of the shortest distance.

According to Aspect 3, in the state before use of the pet diaper, the state where the first cut portion and the second cut portion are separated can be more suitably maintained, and it is possible to suppress unintentional tearing of the portion corresponding to the boundary region of the main body portion (the portion between the first cut portion and the second cut portion).

### (Aspect 4)

The pet diaper according to Aspect 3, wherein the shortest distance is 3 mm or more and 5 mm or less.

By setting the shortest distance between the first cut portion and the second cut portion to 3 mm or more, it is possible to effectively suppress unintentional tearing of the portion corresponding to the boundary region of the main body portion, and by suppressing the shortest distance to 5 mm or less, it is possible to prevent breaking of the portion corresponding to the boundary region of the main body portion from becoming difficult.

### (Aspect 5)

The pet diaper according to any one of Aspects 1 to 4, wherein the at least one opening includes a plurality of openings arranged regularly, and a width of a linear hot melt adhesive adhered to a region including the tail insertion portion among at least one of the top sheet and the outer sheet provided with the plurality of openings is larger than the width of the opening and smaller than a distance between centers of two openings adjacent to each other.

According to Aspect 5, it is possible to prevent seepage of the hot melt adhesive from the opening while suitably suppressing delamination of the main body portion in the tail insertion portion.

### (Aspect 6)

The pet diaper according to any one of Aspects 1 to 5, wherein a moisture permeability of the inner sheet is 500 g/(m²·24h) or more.

### (Aspect 7)

The pet diaper according to any one of Aspects 1 to 6, wherein a plurality of micropores are formed in the inner sheet.

According to Aspect 6 or 7, the inner sheet can be made easy to break. As a result, the breaking processing of the portion corresponding to the boundary region of the main body portion can be further facilitated.

### (Aspect 8)

The pet diaper according to any one of Aspects 1 to 7, wherein in the boundary region, at least one first opening penetrating in the thickness direction and having a predetermined area is provided in the top sheet, and at least one second opening penetrating in the thickness direction and having a predetermined area is provided in the outer sheet.

According to Aspect 8, by providing openings in both the top sheet and the outer sheet in the boundary region, the portion corresponding to the boundary region of the main body portion can be made even easier to tear.

### (Aspect 9)

The pet diaper according to Aspect 8, wherein in the boundary region, the at least one first opening and the at least one second opening have a portion overlapping each other in the thickness direction.

According to Aspect 9, since a material strength (thickness) of the main body portion can be reduced in the portion where the first opening and the second opening overlap, the portion can be made easy to tear. As a result, the breaking processing of the portion corresponding to the boundary region of the main body portion can be further facilitated.

### (Aspect 10)

The pet diaper according to Aspect 8, wherein in the boundary region, a portion where the first opening and the second opening overlap each other in the thickness direction is not provided.

According to Aspect 10, by preventing formation of a portion where the first opening and the second opening overlap in the boundary region (that is, a portion where the material strength (thickness) of the main body portion becomes particularly small), it is possible to prevent the portion corresponding to the boundary region of the main body portion from becoming too easy to tear, and by extension, prevent the portion corresponding to the boundary region from being unintentionally torn.

### [Embodiment]

Hereinafter, embodiments of the present disclosure will be described in detail with reference to the drawings. Note that in the following description, the same reference numerals are used for the same or corresponding elements, and redundant description will be omitted.

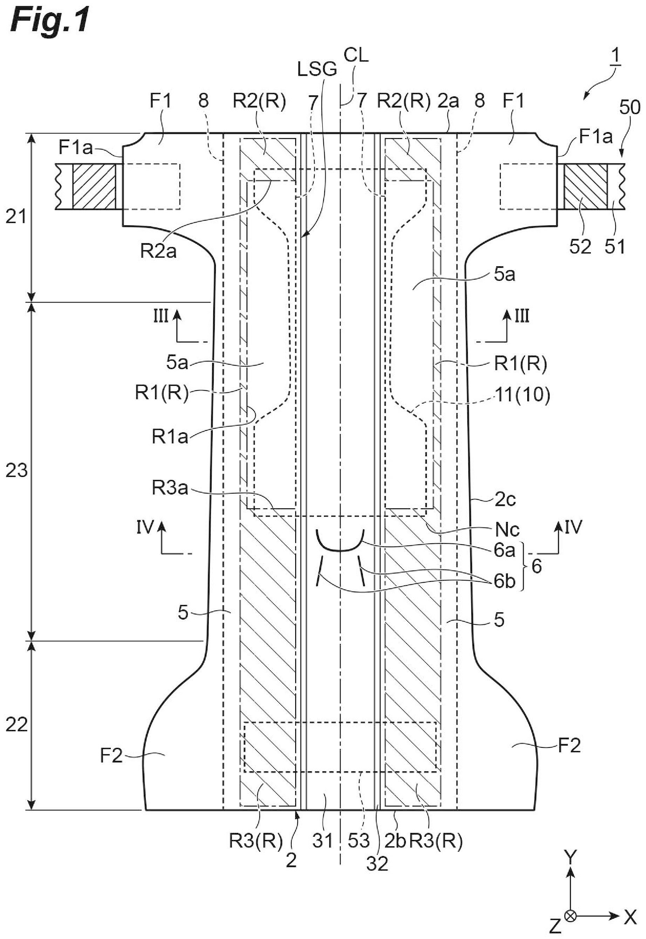

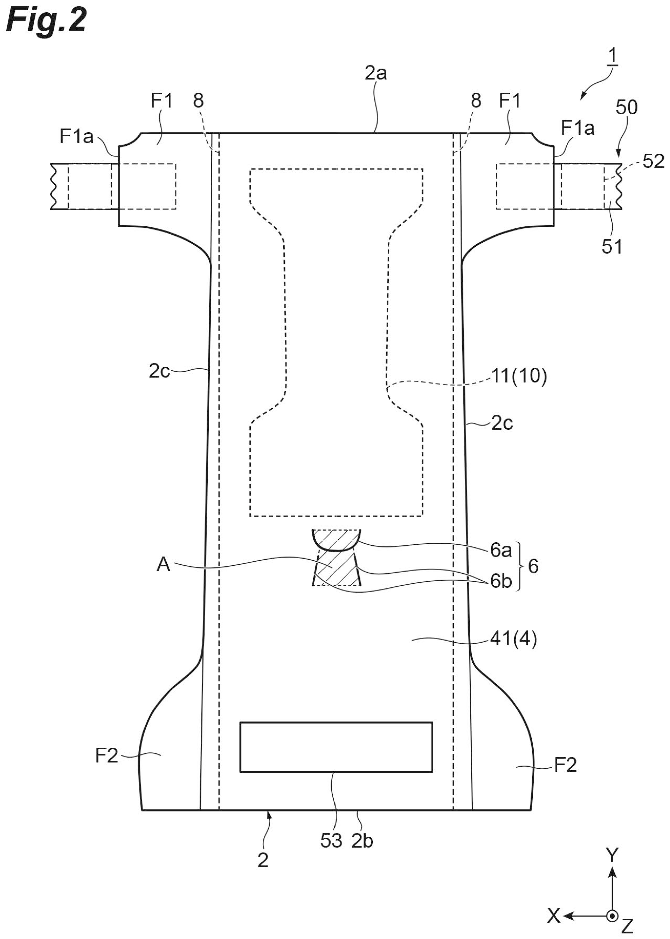

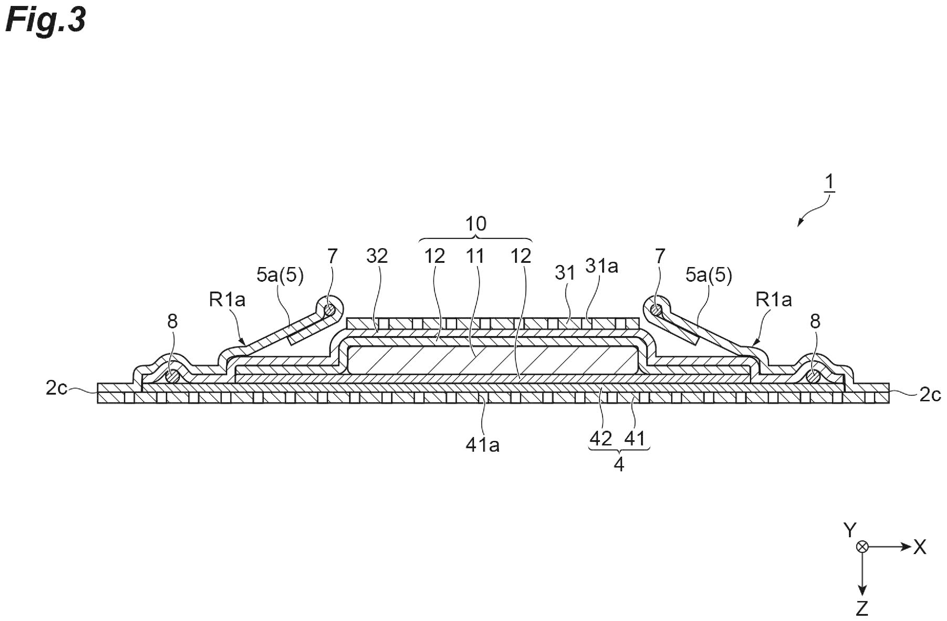

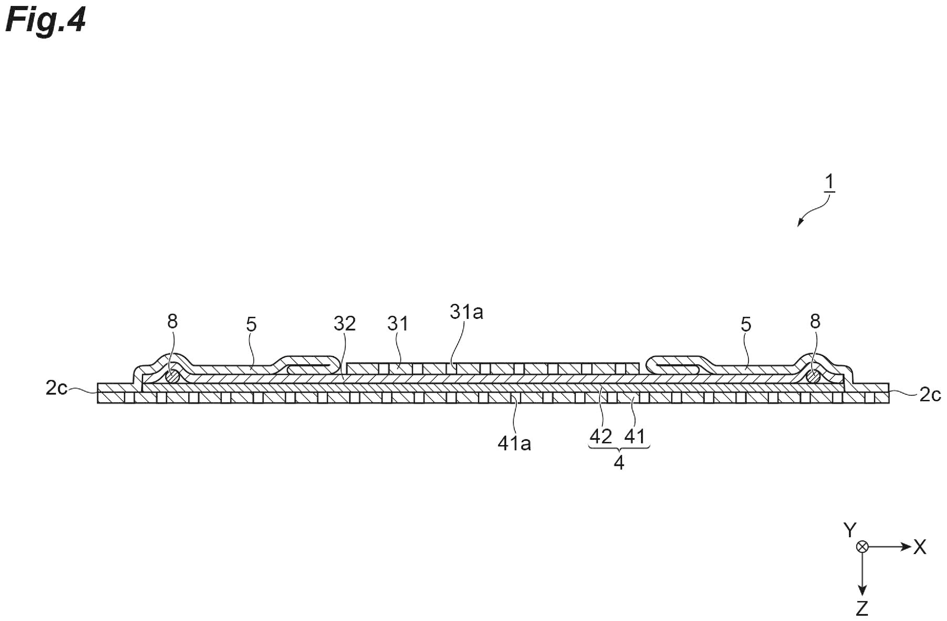

An overall configuration of a pet diaper 1 according to an embodiment will be described with reference to FIGS. 1 to 4. FIG. 1 is a plan view of the pet diaper 1 as viewed from a skin side. FIG. 2 is a plan view of the pet diaper 1 as viewed from a non-skin side. FIGS. 1 and 2 show the pet diaper 1 in a stretched state in which the pet diaper 1 is stretched until no wrinkles are formed. FIG. 3 is a cross-sectional view of the pet diaper 1 taken along line III-III of FIG. 1. FIG. 4 is a cross-sectional view of the pet diaper 1 taken along line IV-IV of FIG. 1. In FIGS. 1 and 2, illustration of openings 31a and 41a described later is omitted. The pet diaper 1 is a diaper to be worn on a pet. In the present specification, "pet" broadly includes vertebrates and invertebrates, and typically includes companion animals such as dogs, cats, rabbits, and hamsters. As an example, the pet diaper 1 is a diaper for dogs.

In the present embodiment, the "skin side" is a side facing the skin of the pet in a worn state where the pet diaper 1 is worn on the pet. The "non-skin side" is a side directed to a side opposite to the skin of the pet in the worn state. As shown in FIG. 1, the pet diaper 1 has a longitudinal direction Y connecting a ventral side to a dorsal side of the pet, a width direction X orthogonal to the longitudinal direction Y and disposed along a waistline direction of the pet, and a thickness direction Z orthogonal to the longitudinal direction Y and the width direction X. As shown in FIG. 3, the thickness direction Z is a stacking direction of respective materials (a first sheet 31, a second sheet 32, a back sheet 4, an absorber 10, etc., described later) constituting the pet diaper 1. Further, a straight line passing through a central portion of the pet diaper 1 in the width direction X and parallel to the longitudinal direction Y is referred to as a "center line CL".

The pet diaper 1 includes a main body portion 2 extending in the longitudinal direction Y and the width direction X. The main body portion 2 absorbs urine excreted by the pet wearing the pet diaper 1. The main body portion 2 is divided into a ventral side portion 21 located on the ventral side of the pet in the worn state, a dorsal side portion 22 located on the dorsal side of the pet in the worn state, and a crotch portion 23 located between the ventral side portion 21 and the dorsal side portion 22. The ventral side portion 21, the crotch portion 23, and the dorsal side portion 22 are arranged along the longitudinal direction Y from the ventral side (front) toward the dorsal side (rear) of the pet. As an example, when the main body portion 2 is divided into four equal parts in the longitudinal direction Y, one region located most on the ventral side corresponds to the ventral side portion 21, one region located most on the dorsal side corresponds to the dorsal side portion 22, and two regions located between the ventral side portion 21 and the dorsal side portion 22 (that is, the central portion of the main body portion 2 in the longitudinal direction Y) correspond to the crotch portion 23.

The main body portion 2 has a first sheet 31 (top sheet), a second sheet 32, a back sheet 4, a pair of side sheets 5, and an absorber 10.

The first sheet 31 is a sheet made of a nonwoven fabric disposed at a position facing the skin of the pet in the worn state. The first sheet 31 is a nonwoven fabric such as, for example, an air-through nonwoven fabric, a spunbond nonwoven fabric, a meltblown nonwoven fabric, a point bond nonwoven fabric, a needle punch nonwoven fabric, or a spunlace nonwoven fabric. In the present embodiment, the first sheet 31 is constituted by an air-through nonwoven fabric. Examples of fiber materials of the first sheet 31 include rayon, acetate, cotton, pulp, synthetic fibers, and the like. In the present embodiment, as an example, the first sheet 31 is disposed between top portions of the side sheets 5 on both left and right sides in the stretched state (FIG. 1), and is formed in a rectangular shape extending in the longitudinal direction Y from a ventral side end portion 2a to a dorsal side end portion 2b of the main body portion 2. A center of the first sheet 31 in the width direction X is located on the center line CL. However, the shape of the first sheet 31 and the region where the first sheet 31 is disposed are not limited to the present embodiment. The first sheet 31 only needs to be provided in a portion including at least a boundary region B described later. The first sheet 31 is joined to the second sheet 32 by a hot melt adhesive (HMA).

The second sheet 32 is a liquid-permeable sheet disposed between the first sheet 31 and the absorber 10. The second sheet 32 can be constituted by, for example, a nonwoven fabric similar to the first sheet 31. The second sheet 32 is provided wider than the first sheet 31, and is also provided at a position overlapping the pair of side sheets 5.

The back sheet 4 is a liquid-impermeable sheet disposed on the side opposite to the skin side of the pet in the worn state. The back sheet 4 can be formed by, for example, a liquid-impermeable nonwoven fabric, a synthetic resin film, or a composite sheet thereof. In the present embodiment, the back sheet 4 has an exterior sheet 41 (outer sheet) and a leakage-preventing sheet 42 (inner sheet). The exterior sheet 41 is disposed on the outer side (non-skin side) relative to the leakage-preventing sheet 42, and constitutes the outermost surface of the main body portion 2. The exterior sheet 41 is formed by, for example, a liquid-impermeable nonwoven fabric. The leakage-preventing sheet 42 is disposed between the exterior sheet 41 and the absorber 10 (absorbent core 11), and is joined to the exterior sheet 41. More specifically, the exterior sheet 41 is joined to the leakage-preventing sheet 42 by a hot melt adhesive (HMA). The leakage-preventing sheet 42 is formed by, for example, a liquid-impermeable synthetic resin film.

The pair of side sheets 5 are sheets for forming leg side gathers LSG, which are upright leakage-preventing gathers, in the ventral side portion 21 and the crotch portion 23. The side sheet 5 can be formed by, for example, a nonwoven fabric having water repellency or hydrophobicity. As shown in FIGS. 1, 3, and 4, each side sheet 5 is disposed on both sides of the main body portion 2 in the width direction X so as to expose the first sheet 31. Each side sheet 5 extends along the longitudinal direction Y from the ventral side end portion 2a of the main body portion 2 to the dorsal side end portion 2b of the main body portion 2. As shown in FIGS. 3 and 4, an outer edge of each side sheet 5 in the width direction X coincides with an outer edge of the back sheet 4, and constitutes an outer edge portion 2c of the main body portion 2. Further, an inner portion of each side sheet 5 in the width direction X is folded back to the non-skin side. Between the folded side sheets 5, an elastic member 7 in a state of being stretched in the longitudinal direction Y is disposed from the ventral side portion 21 to the crotch portion 23. The elastic member 7 is, for example, a rubber thread or the like.

As shown in FIG. 1, each side sheet 5 is joined (fixed) to the second sheet 32 at a fixing portion R surrounded by a dashed-dotted line and hatched with diagonal lines. Each fixing portion R is disposed in the entire region of the main body portion 2 in the longitudinal direction Y. Each fixing portion R has a fixing portion R1 extending in the longitudinal direction Y along an outer edge portion of the fixing portion R in the width direction X, a rectangular fixing portion R2 formed at a ventral side end portion of the fixing portion R in the longitudinal direction Y, and a rectangular fixing portion R3 formed at a dorsal side end portion of the fixing portion R in the longitudinal direction Y.

An upright portion 5a is constituted by a portion of the side sheet 5 between an inner end portion R2a of the fixing portion R2 in the longitudinal direction Y and an inner end portion R3a of the fixing portion R3 in the longitudinal direction Y (that is, a portion of the side sheet 5 where the elastic member 7 is disposed and which is not joined to the second sheet 32). The upright portion 5a is a portion that functions as the leg side gather LSG by standing up due to contraction of the elastic member 7. More specifically, the upright portion 5a is configured to stand up with an inner end portion R1a of the fixing portion R1 in the width direction X as a fulcrum by having both end portions in the longitudinal direction Y fixed by the fixing portions R2 and R3 and contracting in the longitudinal direction Y. That is, the end portion R1a of the fixing portion R1 functions as an upright fulcrum of the leg side gather LSG.

The absorber 10 is disposed between the first sheet 31 and the back sheet 4 (in the present embodiment, between the second sheet 32 and the leakage-preventing sheet 42). As shown in FIG. 3, the absorber 10 consists of an absorbent core 11 and a core wrap 12 covering an upper surface and a lower surface of the absorbent core 11. The absorbent core 11 is disposed so as to span the ventral side portion 21 and the crotch portion 23, and is not disposed in the dorsal side portion 22. The absorbent core 11 is a member that absorbs urine of the pet, and has liquid absorbency and liquid retention. The absorbent core 11 is, for example, a laminate of absorbent materials including pulverized pulp or super absorbent polymer (SAP), or a mixture thereof. The core wrap 12 is, for example, a tissue or a nonwoven fabric sheet. As an example, the absorbent core 11 is formed in a gourd shape (or an hourglass shape) when viewed from the thickness direction Z, and has a shape in which a central portion of the absorbent core 11 in the longitudinal direction Y is constricted.

As shown in FIGS. 1 and 2, the main body portion 2 is provided with a tail insertion portion 6 for inserting the tail of the pet. As an example, the tail insertion portion 6 is constituted by one cut portion 6a (first cut portion) and two cut portions 6b (second cut portions) provided separately from the cut portion 6a. The cut portions 6a and 6b are formed by cutting the main body portion 2 in the thickness direction Z, and penetrate the main body portion 2 in the thickness direction Z. The cut portion 6a is provided in a central portion in the width direction X of a region on the dorsal side relative to the absorbent core 11 of the crotch portion 23. The cut portion 6a extends in the width direction X across the center line CL and is formed in a curved shape (arc shape) convex toward the dorsal side. The two cut portions 6b are provided on both sides across the center line CL at positions close to the cut portion 6a on the dorsal side relative to the cut portion 6a. The two cut portions 6b have a linear shape inclined with respect to the longitudinal direction Y such that an interval between the two cut portions 6b widens from the ventral side toward the dorsal side.

By pushing a portion between end portions of the cut portion 6a in the width direction X and on the ventral side relative to the cut portion 6a toward the non-skin side, a substantially semicircular opening for inserting the tail of the pet is formed. Further, by tearing a portion of the main body portion 2 between the cut portion 6a and the two cut portions 6b, the cut portion 6a and the two cut portions 6b can be connected. In this case, as shown in FIG. 2, it becomes possible to form an opening having a region A larger than the opening formed by the cut portion 6a. Thus, in the present embodiment, the tail insertion portion 6 is configured such that an opening size can be adjusted (enlarged) by connecting the two cut portions 6b with the cut portion 6a as necessary. Note that the shape and size of the tail insertion portion 6 are not limited to those of the present embodiment. For example, at least one of the cut portions 6a and 6b may be formed not by a cut but by an opening having a predetermined area (for example, an elliptical opening or the like).

On both sides of the ventral side portion 21 in the width direction X, a pair of flap portions F1 protruding outward in the width direction X are formed. Similarly, on both sides of the dorsal side portion 22 in the width direction X, a pair of flap portions F2 protruding outward in the width direction X are formed. A pair of fastening tabs 50 are provided on the pair of flap portions F1. A target portion 53 is provided in a region between the pair of flap portions F2 in the dorsal side portion 22.

Each fastening tab 50 extends outward in the width direction X from both end portions of the main body portion 2 (flap portions F1) in the width direction X (end portions F1a of the flap portions F1 in the width direction X). Each fastening tab 50 has a rectangular shape long in the width direction X, and is disposed in the vicinity of the ventral side end portion 2a of the main body portion 2. Each fastening tab 50 has a base material sheet 51 joined to the flap portion F1, and an engaging portion 52 provided on a surface of the base material sheet 51 on the skin side. A part of the base material sheet 51 is sandwiched between, for example, the side sheet 5 and the back sheet 4. The engaging portion 52 is, for example, a hook-and-loop fastener (for example, a plurality of hook-like members) configured to be engageable with the target portion 53.

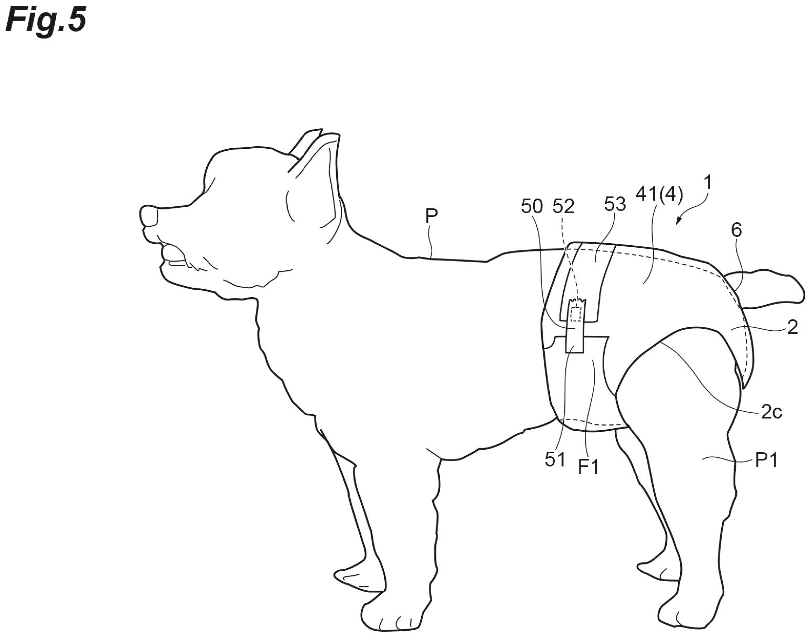

The target portion 53 has a rectangular shape long in the width direction X, and is disposed in the vicinity of the dorsal side end portion 2b of the main body portion 2 on the surface of the back sheet 4 (exterior sheet 41) on the non-skin side. As shown in FIG. 5, in the worn state, the engaging portions 52 of the pair of fastening tabs 50 are engaged with the target portion 53. FIG. 5 shows a state in which a pet P is standing in the worn state.

The main body portion 2 has a pair of elastic members 8 that are disposed extending in the longitudinal direction Y along the outer edge portions 2c of the main body portion 2 in the width direction X (in the present embodiment, portions of the outer edge portions 2c located in the crotch portion 23 where the flap portions F1 and F2 are not provided) and contract in the longitudinal direction Y. Each elastic member 8 is, for example, a rubber thread similar to the elastic member 7. In the present embodiment, as shown in FIG. 3, each elastic member 8 is disposed between the second sheet 32 and the back sheet 4 (leakage-preventing sheet 42). As shown in FIG. 5, in the worn state, the pair of elastic members 8 contract in the longitudinal direction Y, whereby the outer edge portions 2c of the main body portion 2 function as leg gathers that fit around the legs of the pet P.

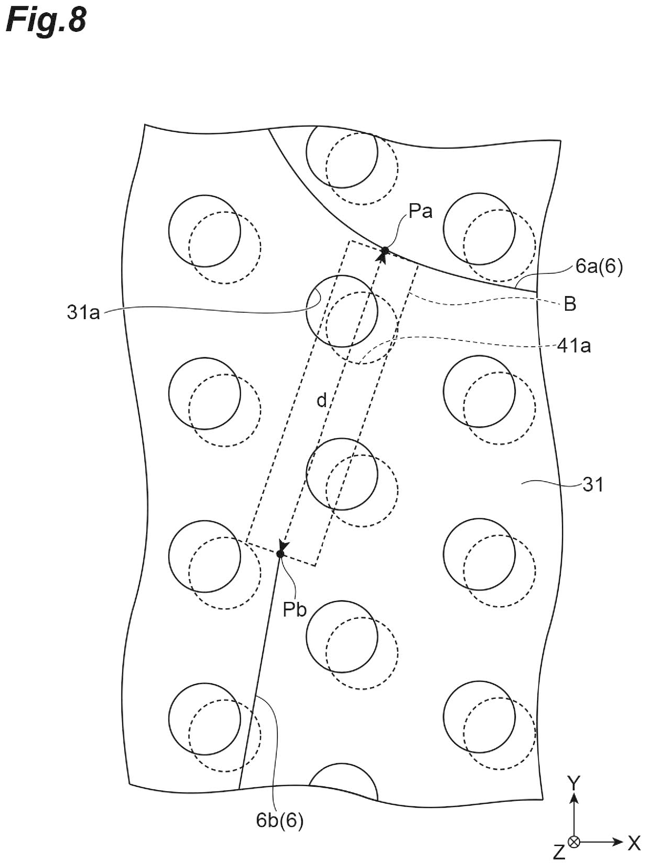

The pet diaper 1 has a configuration for making it easy to tear a portion between the cut portion 6a and the two cut portions 6b (boundary region B shown in FIG. 8). Hereinafter, an example of the above configuration will be described in detail.

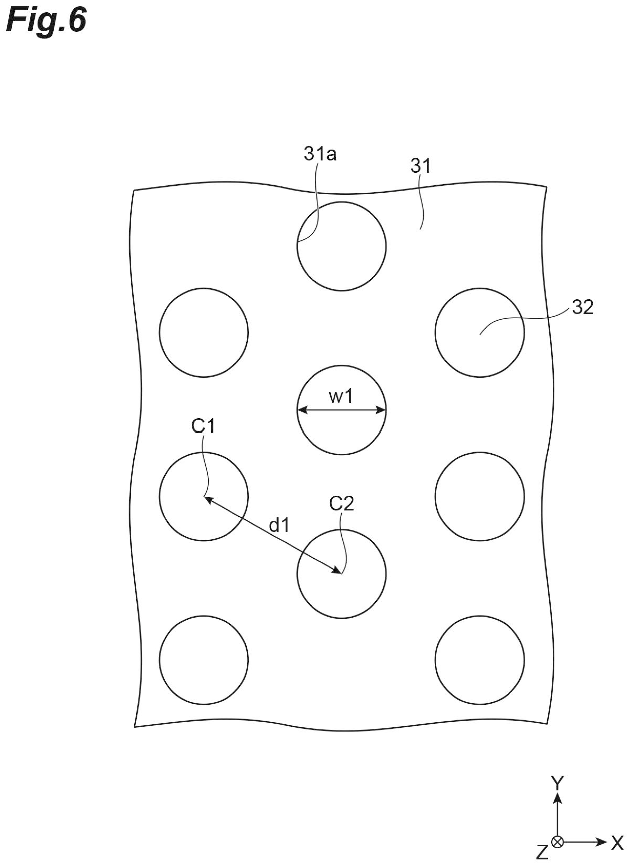

As shown in FIGS. 3, 4, and 6, the first sheet 31 is provided with a plurality of openings 31a (first openings) arranged regularly. Each opening 31a penetrates in the thickness direction Z and has a predetermined area. That is, unlike a cut, each opening 31a is formed by cutting out a part of the first sheet 31 so as to have a predetermined area. In the present embodiment, each opening 31a is formed in a circular shape when viewed from the thickness direction Z. Further, as shown in FIG. 6, the plurality of openings 31a are arranged in a rhombic lattice pattern, and a distance d1 between centers C1 of two openings 31a adjacent to each other is the same among all the openings 31a. A width w1 of the opening 31a is, for example, about 1.2 mm. In the present embodiment, since the opening 31a is circular, the width w1 of the opening 31a is equal to a diameter of the opening 31a. When the opening 31a has a shape other than a circular shape (for example, an elliptical shape or the like), the width w1 of the opening 31a can be defined as a radius of a circle having a minimum radius encompassing the opening 31a (in other words, a maximum value of a distance between arbitrary two points on an edge of the opening 31a). Since the first sheet 31 is provided on the second sheet 32, the surface of the second sheet 32 is exposed to the skin side via the openings 31a.

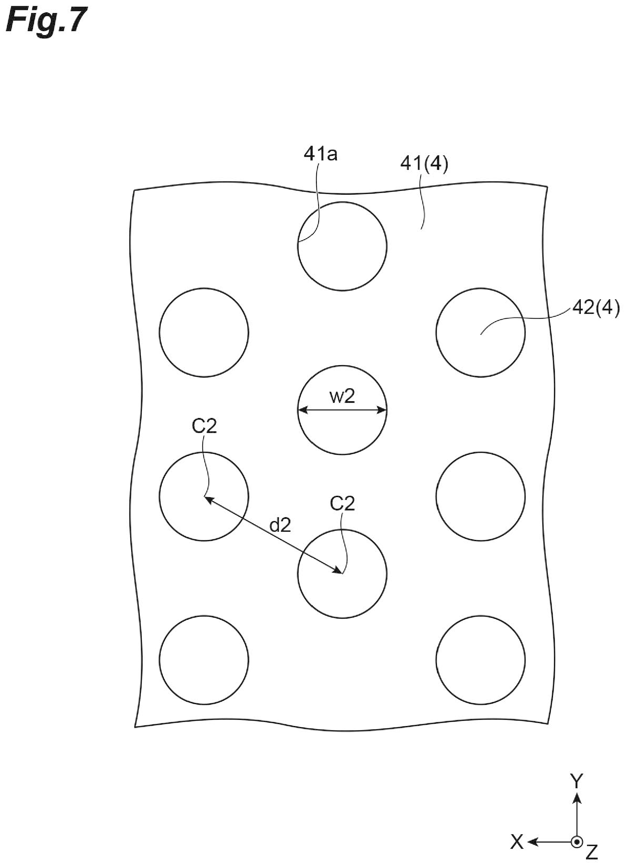

As shown in FIGS. 3, 4, and 7, the exterior sheet 41 is provided with a plurality of openings 41a (second openings) arranged regularly. Each opening 41a penetrates in the thickness direction Z and has a predetermined area. In the present embodiment, each opening 41a has a shape similar to that of the opening 31a, and is arranged similarly to the plurality of openings 31a. That is, each opening 41a is formed in a circular shape when viewed from the thickness direction Z. Further, as shown in FIG. 7, the plurality of openings 41a are arranged in a rhombic lattice pattern, and a distance d2 between centers C2 of two openings 41a adjacent to each other is the same among all the openings 41a. A width w2 of the opening 41a is, for example, about 1.2 mm. In the present embodiment, since the opening 41a is circular, the width w2 of the opening 41a is equal to a diameter of the opening 41a. When the opening 41a has a shape other than a circular shape (for example, an elliptical shape or the like), the width w2 of the opening 41a can be defined as a radius of a circle having a minimum radius encompassing the opening 41a (in other words, a maximum value of a distance between arbitrary two points on an edge of the opening 41a). Since the exterior sheet 41 is provided on the leakage-preventing sheet 42, the surface of the leakage-preventing sheet 42 is exposed to the non-skin side via the openings 41a.

In the boundary region B between the cut portion 6a and the cut portion 6b of the main body portion 2, at least one opening (opening 31a or opening 41a) is provided in at least one of the first sheet 31 and the exterior sheet 41. As shown in FIG. 8, in the present embodiment, as an example, two openings 31a (that is, openings 31a arranged such that at least a part thereof overlaps the boundary region B) and two openings 41a (that is, openings 41a arranged such that at least a part thereof overlaps the boundary region B) are disposed in the boundary region B.

As an example, the boundary region B can be defined as a region along a line segment connecting two points where a linear distance between the cut portion 6a and the cut portion 6b is minimum (that is, a point Pa on the cut portion 6a and a point Pb on the cut portion 6b). In other words, the boundary region B can be defined as a region where a breaking length required to break the main body portion 2 and connect the cut portion 6a and the cut portion 6b becomes shortest (that is, a region including the above line segment). In the present embodiment, the point Pb corresponds to an end portion on the cut portion 6a side (ventral side) of the cut portion 6b extending linearly. The point Pa corresponds to a position where a distance from the point Pb is minimum. For example, the boundary region B can be defined as a rectangular region having a predetermined width (for example, the same width as the widths w1, w2 of the openings 31a, 41a) in a direction orthogonal to the above line segment and extending from the point Pa to the point Pb with the above line segment as a center line. In the present embodiment, the boundary region B exists at two locations: between the cut portion 6a and the left cut portion 6b, and between the cut portion 6a and the right cut portion 6b. FIG. 8 shows a region including the boundary region B between the cut portion 6a and the left cut portion 6b.

Next, effects of the pet diaper 1 described above will be described. In the pet diaper 1, the tail insertion portion 6 has the cut portion 6a and the cut portion 6b provided separately from each other. That is, it is configured such that a tail insertion hole of a predetermined size (in the present embodiment, a size corresponding to the region A in FIG. 2) can be formed by connecting the cut portion 6a and the cut portion 6b. Further, in the boundary region B between the cut portion 6a and the cut portion 6b, openings 31a, 41a are provided in at least one of the top sheet (first sheet 31) and the exterior sheet 41 constituting the main body portion 2 (in the present embodiment, both sheets). That is, as shown in FIG. 8, at least one opening (in the present embodiment, two openings 31a and two openings 41a) is arranged such that at least a part thereof is included in the boundary region B. By providing such openings in the boundary region B, a material strength of a portion corresponding to the boundary region B of the main body portion 2 can be weakened, so that the portion can be made easy to tear. Further, as a result of the portion corresponding to the boundary region B of the main body portion 2 becoming easy to tear, when the user tries to break the portion to connect the cut portion 6a and the cut portion 6b when using the pet diaper 1, it is also prevented that the main body portion 2 is broken in an unexpected direction. Therefore, according to the pet diaper 1, breaking processing for connecting the plurality of cut portions 6a, 6b can be performed easily and accurately.

In the present embodiment, a plurality (four in total) of openings 31a or 41a are arranged in the boundary region B, but in order to obtain the above effect, it is sufficient if at least one opening is arranged in the boundary region B. However, from the viewpoint of improving the above effect, it is preferable that a plurality of openings are arranged in the boundary region B as in the present embodiment.

As shown in FIG. 8, the width w1 of the opening 31a (see FIG. 6) is smaller than the shortest distance between the cut portion 6a and the cut portion 6b (that is, a distance d between the point Pa and the point Pb). Similarly, the width w2 of the opening 41a (see FIG. 7) is also smaller than the distance d. That is, "w1 < d" and "w2 < d" are satisfied. According to the above configuration, in the state before use of the pet diaper 1, it is possible to prevent the cut portion 6a and the cut portion 6b from being connected via the openings 31a, 41a, and to appropriately maintain the state where the cut portion 6a and the cut portion 6b are separated.

Furthermore, in the present embodiment, the widths w1, w2 of the openings 31a, 41a are set to 1/2 or less of the shortest distance (distance d). That is, "w1 ≤ d/2" and "w2 ≤ d/2" are satisfied. According to the above configuration, in the state before use of the pet diaper 1, the state where the cut portion 6a and the cut portion 6b are separated can be more suitably maintained, and it is possible to suppress unintentional tearing of the portion corresponding to the boundary region B of the main body portion 2 (the portion between the cut portion 6a and the cut portion 6b).

The distance d is preferably set to 3 mm or more and 5 mm or less. By setting the distance d to 3 mm or more (that is, not making the distance between the cut portions 6a, 6b too short), it is possible to effectively suppress unintentional tearing of the portion corresponding to the boundary region B of the main body portion 2. Further, by suppressing the distance d to 5 mm or less (that is, not making the distance between the cut portions 6a, 6b too long), it is possible to prevent breaking of the portion corresponding to the boundary region B of the main body portion 2 from becoming difficult.

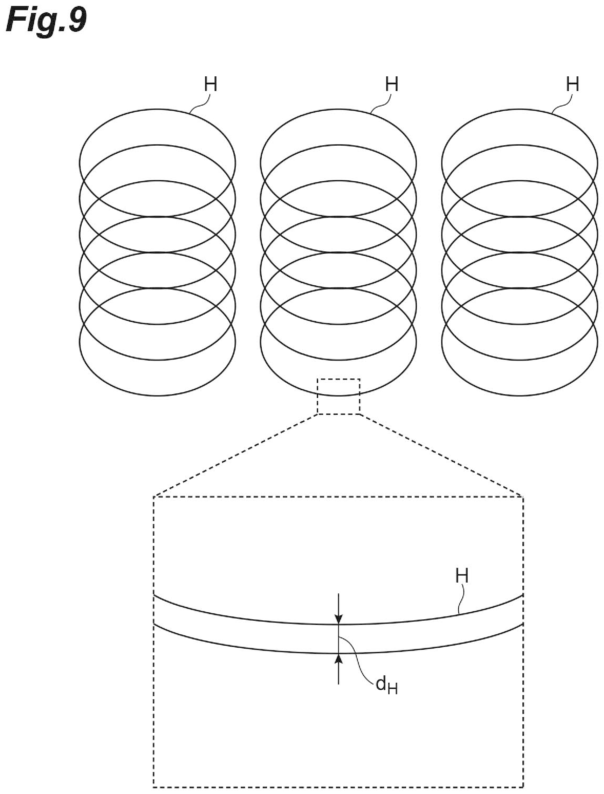

As described above, the first sheet 31 is joined to the second sheet 32 by the hot melt adhesive. In the present embodiment, as an example, as shown in FIG. 9, the first sheet 31 is joined to the second sheet 32 by disposing a linear hot melt adhesive H discharged spirally from a plurality of nozzles (not shown) arranged in the width direction X between the first sheet 31 and the second sheet 32. A width d_{H} (line width) of such a hot melt adhesive H is preferably larger than the width w1 of the opening 31a and smaller than the distance d1 (opening pitch) between the centers C1 of two openings 31a adjacent to each other.

According to the above configuration, it is possible to prevent seepage of the hot melt adhesive H from the opening 31a while suitably suppressing delamination of the main body portion 2 in the tail insertion portion 6. More specifically, when the width d_{H} is set to be equal to or less than the width w1 of the opening 31a, for example, when applying the hot melt adhesive H to the first sheet 31, there is a possibility that the entire line width of the hot melt adhesive H enters the opening 31a, and the hot melt adhesive H easily leaks out from the opening 31a. On the other hand, by making the width d_{H} larger than the width w1, it is possible to prevent leakage of the hot melt adhesive H through the opening 31a as described above, and to secure adhesive strength between the first sheet 31 and the second sheet 32. On the other hand, when the width d_{H} is set to be equal to or larger than the distance d1, the entire opening 31a is likely to be covered with the hot melt adhesive H, and there is a possibility that effects of the opening 31a (for example, the effect of facilitating breaking of the boundary region B as described above, the effect of increasing air permeability, etc.) are impaired. From the above viewpoints, the width d_{H} is preferably set to satisfy "w1 < d_{H} < d1".

Similarly, as shown in FIG. 9, the exterior sheet 41 is joined to the leakage-preventing sheet 42 by disposing the linear hot melt adhesive H discharged spirally between the exterior sheet 41 and the leakage-preventing sheet 42. For the same reason as described above, the width d_{H} (line width) of the hot melt adhesive H is preferably larger than the width w2 of the opening 41a and smaller than the distance d2 (opening pitch) between the centers C2 of two openings 41a adjacent to each other (that is, set to satisfy "w2 < d_{H} < d2").

Further, the moisture permeability of the leakage-preventing sheet 42 is preferably 500 g/(m²·24h) or more. That is, the material of the leakage-preventing sheet 42 preferably satisfies the above condition of moisture permeability. The moisture permeability of the leakage-preventing sheet 42 can be measured by a moisture permeability test method (cup method) for moisture-proof packaging materials specified in "JIS Z 0208:1976". Alternatively, it is preferable that a plurality of micropores are formed in the leakage-preventing sheet 42. A width (diameter) of the micropore is, for example, 0.05 mm or more and 1.0 mm or less, and a distance between centers (pitch) of adjacent micropores is, for example, 0.05 mm or more and 1.0 mm or less. Alternatively, the leakage-preventing sheet 42 may satisfy both of the above requirements. That is, the leakage-preventing sheet 42 may have a plurality of micropores formed therein and satisfy the above condition of moisture permeability. By configuring the leakage-preventing sheet 42 so as to satisfy at least one of the above requirements, the leakage-preventing sheet 42 (portion disposed in the boundary region B of the main body portion 2) can be made easy to break. As a result, the breaking processing of the portion corresponding to the boundary region B of the main body portion 2 can be further facilitated.

In the boundary region B, at least one opening 31a is provided in the first sheet 31, and at least one opening 41a is provided in the exterior sheet 41. In the example shown in FIG. 8, two openings 31a and two openings 41a are arranged in the boundary region B so as to overlap at least partially. According to the above configuration, by providing the openings 31a, 41a in both the first sheet 31 and the exterior sheet 41 located on opposite sides across the leakage-preventing sheet 42 in the boundary region B, the portion corresponding to the boundary region B of the main body portion 2 can be made even easier to tear.

As shown in FIG. 8, in the boundary region B, the at least one opening 31a and the at least one opening 41a have a portion overlapping each other in the Z-axis direction. In the present embodiment, each of the two openings 31a and each of the two openings 41a have a portion overlapping each other within the boundary region B. According to the above configuration, since the material strength (thickness) of the main body portion 2 can be reduced in the portion where the opening 31a and the opening 41a overlap, the portion can be made easy to tear. As a result, the breaking processing of the portion corresponding to the boundary region B of the main body portion 2 can be further facilitated.

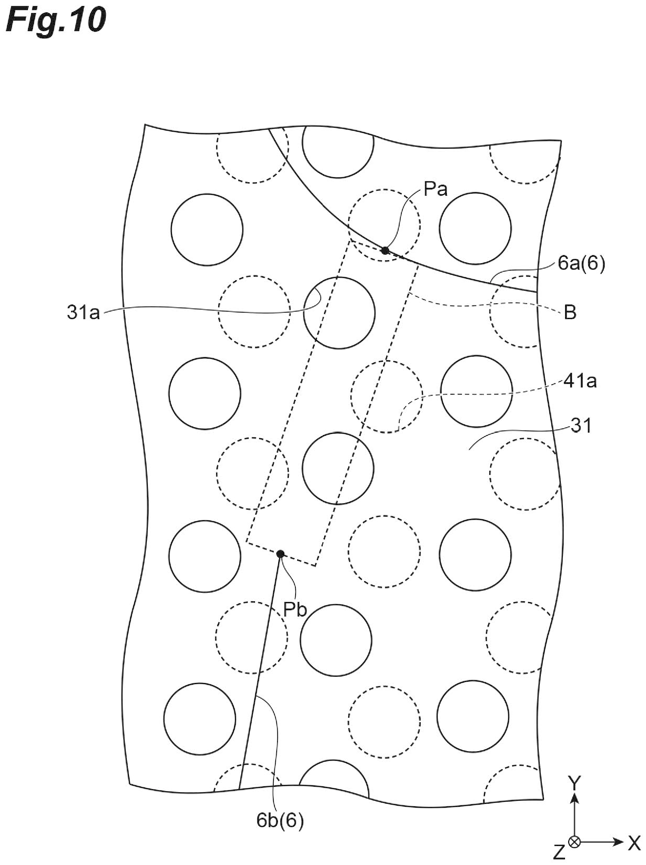

Alternatively, as in a modification shown in FIG. 10, in the boundary region B, a portion where the opening 31a and the opening 41a overlap each other in the Z-axis direction may not be provided. In other words, at least in the boundary region B, the opening 31a and the opening 41a may be arranged so as not to overlap each other in the Z-axis direction. In the example of FIG. 10, by shifting positions of the plurality of openings 31a and positions of the plurality of openings 41a arranged in a similar rhombic lattice pattern, the openings 31a and the openings 41a are arranged so as not to overlap even in regions other than the boundary region B. According to the above configuration, by preventing formation of a portion where the opening 31a and the opening 41a overlap in the boundary region B (that is, a portion where the material strength (thickness) of the main body portion 2 becomes particularly small), it is possible to prevent the portion corresponding to the boundary region B of the main body portion 2 from becoming too easy to tear, and by extension, prevent the portion corresponding to the boundary region B from being unintentionally torn.

Further, in the present embodiment, the tail insertion portion 6 is disposed at a position not overlapping the absorbent core 11. That is, in the region where the tail insertion portion 6 is provided (for example, the region A in FIG. 2), a liquid absorbing layer (absorber 10) is not disposed between the second sheet 32 and the leakage-preventing sheet 42, and the second sheet 32 and the leakage-preventing sheet 42 are joined to each other by an adhesive such as a hot melt adhesive. Thereby, leakage of urine from an edge portion (cut) of the tail insertion portion 6 is prevented. Further, since the plurality of openings 31a are provided in the first sheet 31 on the absorber 10, it is possible to appropriately prevent urine from flowing or being retained on the surface of the first sheet 31. Further, by making the sheet disposed on the absorber 10 a two-layer structure of the first sheet 31 and the second sheet 32, providing the openings 31a only in the upper first sheet 31, and not providing openings in the second sheet 32 covering the absorber 10, it is possible to appropriately prevent SAP or the like contained in the absorber 10 (mainly the absorbent core 11) from leaking to the outside.

### [Modification]

Although the embodiments of the present disclosure have been described above, the present disclosure is not limited to the above embodiments. Materials and shapes of respective configurations are not limited to the materials and shapes described above, and various materials and shapes can be adopted. Further, some configurations included in the configurations of the above-described embodiments may be changed or omitted, or other configurations may be added.

For example, in the above embodiment, the openings 31a, 41a are formed in both the first sheet 31 and the exterior sheet 41, but the openings may be formed in only one of the first sheet 31 and the exterior sheet 41. Further, from the viewpoint of facilitating the breaking processing of the portion corresponding to the boundary region B described above, the opening 31a or the opening 41a may be provided only in the boundary region B. That is, the opening 31a or the opening 41a may not be provided in regions other than the boundary region B. Further, the arrangement pattern of the plurality of openings 31a is not limited to the rhombic lattice pattern of the above embodiment, and may be arranged according to other arrangement patterns. Further, the plurality of openings 31a may be arranged irregularly. The same applies to the plurality of openings 41a.

Further, in the above embodiment, the sheet member on the skin side relative to the absorber 10 is constituted by two layers of sheets (the first sheet 31 and the second sheet 32), but may be constituted by only one layer of surface sheet. In this case, openings similar to the openings 31a may be provided in the one layer of surface sheet.

### Reference Signs List

1...Pet diaper, 2...Main body portion, 4...Back sheet, 6...Tail insertion portion, 6a...Cut portion (first cut portion), 6b...Cut portion (second cut portion), 11...Absorbent core, 31...First sheet (top sheet), 31a...Opening (first opening), 41...Exterior sheet (outer sheet), 41a...Opening (second opening), 42...Leakage-preventing sheet (inner sheet), B...Boundary region, H...Hot melt adhesive, P...Pet.

## Claims

1. A pet diaper to be worn on a pet, comprising a main body portion having:
a top sheet made of a nonwoven fabric disposed at a position facing a skin of the pet in a worn state where the pet diaper is worn on the pet;
a back sheet disposed on a side opposite to a skin side of the pet in the worn state; and
an absorbent core disposed between the top sheet and the back sheet, wherein
the back sheet has:
an outer sheet made of a nonwoven fabric constituting an outermost surface of the main body portion; and
an inner sheet disposed between the outer sheet and the absorbent core,
the main body portion is provided with a tail insertion portion for inserting a tail of the pet,
the tail insertion portion has a first cut portion formed by cutting the main body portion in a thickness direction which is a stacking direction of sheets constituting the main body portion, and a second cut portion provided separately from the first cut portion, and
in a boundary region between the first cut portion and the second cut portion of the main body portion, at least one opening penetrating in the thickness direction and having a predetermined area is provided in at least one of the top sheet and the outer sheet.

2. The pet diaper according to claim 1, wherein a width of the opening is smaller than a shortest distance between the first cut portion and the second cut portion.

3. The pet diaper according to claim 2, wherein the width of the opening is 1/2 or less of the shortest distance.

4. The pet diaper according to claim 3, wherein the shortest distance is 3 mm or more and 5 mm or less.

5. The pet diaper according to claim 1, wherein
the at least one opening includes a plurality of openings arranged regularly, and
a width of a linear hot melt adhesive adhered to a region including the tail insertion portion among at least one of the top sheet and the outer sheet provided with the plurality of openings is larger than the width of the opening and smaller than a distance between centers of two openings adjacent to each other.

6. The pet diaper according to claim 1, wherein a moisture permeability of the inner sheet is 500 g/(m²·24h) or more.

7. The pet diaper according to claim 1, wherein a plurality of micropores are formed in the inner sheet.

8. The pet diaper according to claim 1, wherein in the boundary region, at least one first opening penetrating in the thickness direction and having a predetermined area is provided in the top sheet, and at least one second opening penetrating in the thickness direction and having a predetermined area is provided in the outer sheet.

9. The pet diaper according to claim 8, wherein in the boundary region, the at least one first opening and the at least one second opening have a portion overlapping each other in the thickness direction.

10. The pet diaper according to claim 8, wherein in the boundary region, a portion where the first opening and the second opening overlap each other in the thickness direction is not provided.
